# EUROPÄISCHE PATENTANMELDUNG

(11) **EP 2 738 384 A2**
(43) Veröffentlichungstag der Anmeldung: **04.06.2014**
(21) Anmeldenummer: 13075060.7
(22) Anmeldetag: 04.09.2013
(51) Int. Cl.: F03G 7/04, H02J 15/00

(54) **Energieversorgungssystem**

(30) Priorität: 05.09.2012 DE 102012017866; 21.09.2012 DE 102012019266; 07.01.2013 DE 102013000542; 20.03.2013 DE 102013005330
(71) Anmelder: Dreznjak, Ivan, 12105 Berlin (DE)
(72) Erfinder: Dreznjak, Ivan, 12105 Berlin (DE)

(57) **Zusammenfassung**

Die Erfindung betrifft einen Gasspeicher und ein Energieversorgungssystem mit einem Gasspeicher. Das Energieversorgungssystem umfasst mindestens ein Kraftwerk welches zur Erzeugung elektrischer Energie exklusiv mittels konventioneller Energieträger, insbesondere fossiler Energieträger und / oder Nuklear-technologie konzipiert, gebaut und betrieben wurde, und welches durch Nachrüstung darüberhinaus konfiguriert ist, mittels solarer Energie elektrische Energie zu erzeugen. Der Gasspeicher dient zur Speicherung von Gas und ist unter Wasser angeordnet und er nur voll funktionsfähig, wenn ein Wasserdruck auf eine Oberfläche des Gasspeichers wirkt.

## Beschreibung

Die Erfindung umfasst ein Energieversorgungssystem mit einem Kraftwerk zur Erzeugung elektrischen Stroms, dadurch gekennzeichnet, dass diese zur Erzeugung des elektrischen Stroms mittels konventioneller Energieträger, wie z.B. aus fossilen Energieträgern und oder Nukleartechnik konzipiert und gebaut wurden, durch Nachrüstung auch solare Energie zur Stromerzeugung genutzt wird. Eine weitere Verbesserung ergibt sich wenn überschüssiger Strom in Wasserstoff gewandelt und dieser in grossen Gasspeichern im Meer, insbesondere in großen Tiefen, gespeichert wird.

Dazu kann man die analog zu solarthermischen Kraftwerken gewonnene Wärme zumindest teilweise zu einem konventionellen Kraftwerk geleitet werden. Dies kann mittels des erhitzen Öls in einer Rohrleitung oder auch mehreren Rohrleitungen erfolgen, welche ggf. thermisch isoliert sein kann. Der Rückfluss des Öls kann ebenfalls per Rohr erfolgen. So können auch mehrere Kollektorfelder an ein Kraftwerk angeschlossen werden. Unter Kollektorfeld können auch die Spiegel eines solaren Kraftwerks, insbesondere Turmkraftwerks insbesondere zusammen mit dem Turm selbst verstanden werden. Unter Kollektorfeld können auch Spiegel und Absorberrohre eines Rinnen- insbesondere eines Parabolrinnenkraftwerks verstanden werden. Gemeint ist ein beliebiger Hohlspiegel, der geeignet ist, Sonnenlicht zu bündeln - insbesondere auf eine Rinne oder Rohr bzw. entlang einer Rinne. Ggf. kann ein Wärmespeicher zur Möglichkeit der Stromerzeugung bei wenig Sonnenlicht, z.B. in Nacht installiert werden. Ggf. kann auch das Transportmedium selbst in Wärmespeichern auch als Speichermedium für Wärme dienen.

Unter einem konventionellen Kraftwerk sind zumindest alle Kraftwerke zu verstehen, die zumindest einen Teil oder einen wesentlichen Teil (mehr als 90 % oder mehr als 75%), ggf. den Gesamtteil des Stroms mit Hilfe von Verbrennung von chemischer, insbesondere fossiler Energieträger und/oder durch Nukleartechnik bisher erzeugen oder technisch dafür ausgelegt wurden. Der Vorteil ist, dass solche Kraftwerke in der Regel bereits ans Stromnetz angeschlossen sind und auch die Investition in Technik zur Wandlung von thermischer Energie in elektrischen Strom ist zumindest teilweise vorhanden. Die thermische Energie aus dem Parabolrinnenkollektorfeld kann dann im konventionellen Kraftwerk in elektrischen Strom gewandelt werden. Ggf. sind hierfür Wärmetauscher zur Übertragung der thermischen Energie aus dem Öl auf den Wasserdampf zum Antrieb der Turbine zu installieren. Ggf. können bestehende Systeme zur Übertragung der konventionell erzeugten Thermischen Energie auf den Wasserdampf zumindest Teilweise genutzt werden. Ggf kann ein konventionelles Kraftwerk um eine Einheit zur Stromwandlung der solaren Energie ergänzt werden und die Einspeisetechnik für den elektrischen Strom des restlichen Kraftwerks dann zumindest teilweise nutzt.

Die thermische Energie des solaren Kollektorfelds kann ergänzend oder ersetzend zur konventionellen Erzeugung von thermischer Energie im Kraftwerk genutzt werden. Ggf. können nukleare Kraftwerke auch so nachgerüstet werden, dass Sie ergänzend oder ersetzend zur solaren Wärme auch Wärme aus chemischer Verbrennung von z.B. Wasserstoff zur Stromerzeugung nutzen.

Bei geringerer Sonneneinstrahlung kann die Durchströmmenge des Trägermediums durch den Absorber verringert werden. Ggf. kann so die Temperatur des Trägermediums für Solarthermie relativ konstant gehalten werden. Der Wärmetauscher beim Kraftwerk kann so gestaltet sein, dass je nach Menge des anströmenden Trägermediums für Solarthermie unterschiedlich grosse Bereiche mit unterschiedlich grosser Menge an Wasser bzw. Wasserdampf zur Stromerzeugung mit Solarthermie erwärmt werden. Zusätzlich kann weiteres Wasser durch Zufeuerung chemischer Energieträger bzw. nuklearer oder sonstiger konventioneller Energie erwärmt werden. Ggf. können Teile des Wärmetauschers wechselseitig für Solarthermie und/oder die Zufeuerung chemischer bzw. nuklearer oder sonstiger konventioneller Energieträger ausgelegt sein. Ggf. kann Wasser bzw. Wasserdampf der durch Solarthermie erwärmt wurde durch chemische bzw. nukleare oder sonstige konventionelle Brennstoffe weiter erwärmt werden. Ggf. kann bei geringer Sonneneinstrahlung bzw. geringer Ausbeute an Solarthermie diese direkt über ein Ventil ins Fernwärmenetz eingespeist werden, während die Stromerzeugung dann konventionell erfolgt.

Ein weiterer Vorteil ist, dass ein Speicher oder zumindest kein überdimensionierter Speicher - weder beim Kollektorfeld, noch beim Kraftwerk nötig ist, da bei Bedarf auf die ohnehin vorhandene konventionelle Kraftwerkstechnik zurück gegriffen werden kann. Die Verfügbarkeit von elektrischem Strom mittels Energie aus solaren Kollektorfeldern würde sich so an die konventioneller Kraftwerke angleichen.

An Stelle von Rinnenkollektoren oder dem Solarturm, können alle möglichen anderen Kollektortechniken, insbesondere solare, oder Kombinationen daraus, genutzt werden. Um den Transportweg für das Öl vom Kollektorfeld zum Kraftwerk zu verkürzen, können die Kollektorfelder in der Nähe von Kraftwerken aufgestellt werden. Die Energie aus dem Kollektorfeld, kann ggf. auch für sog. Fernwärmenetze nach dem Vorbild konventioneller Kraftwerke genutzt werden. Dazu sind die Kollektorfelder an Komponenten von Fernwärmenetzen anzuschliessen. So kann per Wärmetauscher aus dem Transportmedium für die solarthermische Energie auf die Wärme in den bzw. die Wärmespeicher von Fernwärmenetzen übertragen werden. Ggf. kann auch das Transportmedium selbst in Wärmespeichern auch als Speichermedium für Wärme dienen. Die Fernwärmenetze inkl. Heizkraftwerken können ansonsten alle Merkmale heutiger Fernwärmenetze aufweisen.

Die Kollektorfelder können auch zu bestimmten Jahreszeite aufgestellt bzw. vergrößert und / oder verkleinert werden. So können bestimmte Flächen im Frühling und Sommer für die Landwirtschaft genutzt werden und nach der Ernte dann für die Solarthermie zur Verfügung stehen.

Eine weitere Möglichkeit den Transportweg zu verkürzen, ist es Flächen auf Dächern von Gebäuden, die sich möglichst in der Nähe von Kraftwerken befinden, zu nutzen. Es kann sich hierbei um Fabrikhallen oder Lagerhallen oder Wohngebäude, insbesondere große Wohngebäude oder Mehrfamilienhäuser oder Wolkenkratzer handeln. Die Energie des jeweiligen Kollektorfeldes kann wie bisher auch für die Gebäude selbst genutzt werden, z.B. für Heizung und Warmwasserbedarf der Gebäude oder Klimatisierung bzw. Kühlung bis hin zur Tiefkühlung von Gebäuden oder Teilen davon wie z.B. Tiefkühltheken und oder Kühlschränken und oder Tiefkühllagerhallen. Die Klimatisierung bzw. Kühlung kann dabei durch Umwandlung der thermischen Energie in einem Motor mit angeschlossenem Kompressor für ein Kältemittel erfolgen, bzw. kann die thermische Energie an den Kompressor direkt abgegeben werden. Unter "Flächen auf Dächern von Gebäuden", sind auch Flächen die sich zumindest teilweise über zumindest einem Teil des jeweiligen Daches befinden zu verstehen. Statt nur auf den Dächern, können sich die Kollektoren auch in der Fassade oder vor der Fassade des Gebäudes befinden.

Ein Stirlingmotor, kann so angeordnet sein, dass er mittels solarthermischer Energie einen Kompressor einer Kältemaschine und oder Klimaanlage mechanisch antreibt. Zur Aufnahme der solarthermischen Energie kann ein Kolben des Stirlingmotors bzw. der Kolben zur Aufnahme der thermischen Energie in einen Speicher für solarthermische Energie ragen. Ggf. kann er auch über Leitungen von Speicher für solarthermische Energie mit einem Wärmemedium umströmt werden. Der Stirlingmotor kann auch elektrischen Strom erzeugen, der zum Betrieb einer Kältemaschine und oder Klimaanlage genutzt werden kann. Ggf. kann der Strom, z.B. in Akkus, zwischengespeichert werden. Ggf. können die Akkus Teil einer Kältemaschine und oder Klimaanlage sein.

Das in den Kollektorfeldern der Dächer erhitzte Öl kann auch an ein neues Kraftwerk geleitet werden, dass für den Betrieb mit solarer Energie optimiert ist. Speicher für thermische Energie können sich bei den Kollektorfeldern oder am Kraftwerk befinden. Statt Öl kann auch ein anderes Medium wie Luft oder eine beliebiges Gas bzw. Gasgemisch oder Wasser, bzw. Wasserdampf für den Transport von thermischer Energie vom von den Kollektoren zum Kraftwerk bzw. zur Wandlungseinheit in elektrischen Strom genutzt werden. Ggf. kann erhitztes Wasser, bzw. der Wasserdampf direkt in elektrischen Strom gewandelt werden. Die Abwärme kann bei Bedarf per Fernwärmenetz verteilt werden. die Transportrohre für die thermische Energie von den Kollektoren zum Kraftwerk bzw. zur Wandlungseinheit in elektrischen Strom können zumindest teilweise durch Abwasserrohre bzw. durch die Kanalisation geführt werden, welche ggf. schon vorhanden sein können. Ggf. kann das Fernwärmenetz bzw. die Transportleitungen für die Wärme zwischen Kollektorfeld und Kraftwerk zumindest teilweise bidirektional genutzt werden.

Zu einem Kollektorfeld können u. A. mehrere auch verschiedene Kollektoren zusammengeschlossen sein oder auch ein einzelner Kollektor, meist großflächiger Kollektor verstanden werden. Hier sind auch alle möglichen solaren Kollektoren, auch Flachkollektoren, die das Sonnenlicht nicht bündeln zu verstehen.

Die Kollektoren können auch zu mehreren Kraftwerken bzw. zur Wandlungseinheiten in elektrischen Strom Rohrleitungen haben. Die Rohrleitungen können ggf. als Netzwerk verknüpft sein und z.B. mittels Ventilen gesteuert werden.

Anstelle von Rohrleitungen können Spiegel auf mehreren Dächern aufgestellt sein und das Sonnenlicht so reflektieren, dass es in einen oder mehreren Brennpunkten, z.B. in sog. Solarturmkraft, gebündelt und wird und ggf. so zur Stromerzeugung genutzt werden kann. Statt eines hohen Solarturms kann das Kraftwerk oder zumindest das Element auf das die Spiegel fokussiert werden auf eine natürliche Anhöhe wie einen Berg angebracht werden. Zusätzlich können Hindernisse wie Netze und Wände oder Spiegel um dieses Element so angebracht werden, dass eine Annährung für Menschen in den Bereich ab dem die Sonnenenergie bereits gefährlich hoch fokussiert ist, verhindert und oder zumindest erschwert wird.

Auch kann die Wärme der Kollektoren erst ans Kraftwerk geleitet und der Rückfluss des Wärmeträgers zur thermischen Versorgung von Gebäuden genutzt werden.

Die Stromerzeugung kann auf alle möglichen Art und Weisen erfolgen, insbesondere über Turbinen, Dampfmotoren bzw. Dampfmaschinen und oder Sterlingmotoren. Auch dezentral in relativ kleinen, statt großen Kraftwerken. Die dezentralen Kraftwerke können dazu in oder an Gebäuden aufgestellt sein.

Anspruch auf nachfolgend beschrieben Verbessrungen wird mit Anschluss an konventionelle als auch ohne Anschluss an konventionelle Kraftwerke erhoben.

Als Reflektor bei solaren Kraftwerken, insbesondere solchen zur Wandlung solarthermischer Energie in elektrischen Strom, insbesondere bei Rinnenkraftwerken, können zumindest teilweise biegeschlaffe Elementen wie verspiegelten Folien und oder Textilien und oder Kombinationen aus Folien und Textilien genutzt werden. Die Folien und oder Textilien können an feste, z.B. aus Metall bestehende Elemente z.B. mit Klebstoff angebracht werden. Die Festen Elemente können zum einen die Kurve beschreiben mittels der das Sonnenlicht auf die Rinne reflektiert wird und zum anderen zum anderen können sie an den Rändern entlang der Reflektorfläche, d.h. parallel zur Rinne, der Konstruktion zusätzliche Steifigkeit verleihen, wobei diese festen Elemente zusammensteck- und oder -schraubbar sein können. Auch können die bzw. zumindest ein Randelement so gestaltet sein, dass es durch das Befüllen mit Druckluft Form und/oder Festigkeit erlangt. Auch kann zumindest ein Teil der Reflektorfläche so ausgelegt sein, dass er durch Befüllen mit Druckluft Form und/oder Festigkeit erlangen kann. Es können auch Rippen unterhalb oder auf der Reflektorfläche zur Versteifung eben dieser angebracht werden. Diese können auch so ausgelegt sein, dass sie durch das Befüllen mit Druckluft Form und/oder Festigkeit erlangen können. Grundsätzlich können beliebige Teile eines Solarkraftwerks, insbesondere eines Rinnen-kraftwerks, insbesondere des Spiegels so ausgelegt sein, dass diese durch Druckluft Form und/oder Festigkeit und/oder Formstabilität erlangen. Unter Druckluft sind hier neben gewöhnlicher Umgebungsluft, alle mögliche Gase und Kombinationen von Gasen zu verstehen und verwendbar. Unter Festigkeit kann auch eine Erhöhung der Steifigkeit verstanden werden. Grundsätzlich kann ergänzend oder ersetzend zur Druckluft auch ein Hydrauliksystem verwendet werden. Grundsätzlich wäre auch das bilden von nicht kurvigen Reflektorflächen analog zur Beschreibung im vorhergehenden Absatz mit biegeschlaffen Teilen möglich. Hierzu können parallel zur Rinne Seile von den einzelnen festen Elementen der Reflektorfläche gespannt werden an denen die Folien und oder Textilien geknickt werden. Grundsätzlich können die Folien und oder Textilien um die festen Elemente auch mit einer mechanischen Spannung angebracht werden, so dass es auch bei großen Flächen nicht zu relevanten Verformungen der Reflektorfläche kommt. Mit geeigneten Formen, kann anstelle von Druckluft auch mit Unterdruck gearbeitet werden.

Wesentliche Bestandteile eines solarthermischen Kraftwerks sind Spiegel. Anspruch wird erhoben auf Spiegel die durch Druckluft Form und oder Festigkeit erlangen. Unter Druckluft sind hier neben gewöhnlicher Umgebungsluft, alle mögliche Gase und Kombinationen von Gasen verwendbar. Grundsätzlich kann ergänzend oder ersetzend zur Druckluft auch ein Hydrauliksystem verwendet werden. Es kann eine Schlauchfolie genommen werden. Die Schlauchfolie kann auch durch Zusammenkleben von flächiger Folie entstehen. Diese kann auf zumindest dem oberen Teil zumindest teilweise durchsichtig sein. Ferner kann sie auf der unteren Seite zumindest teilweise und zumindest in Innenrichtung verspiegelt sein oder es kann eine verspiegelte Folie angebracht sein. Wird ein langer Folienschlauch aufgeblasen, dann bildet er einen langen runden Schlauch aus. Wird der Schlauch auf einen länglichen Rahmen - von innen oder aussen - gespannt, dessen Durchmesser grösser ist als der Durchmesser des aufgeblasenen und annähernd runden Schlauchs, so kann sich ein flacherer Spiegel ausbilden. Dieser flachere Spiegel kann zur Konzentration des Sonnenlichts insbesondere in einem Rinnen- ggf. Parabolrinnenkraftwerk genutzt werden. Die Gestaltung des Spiegels kann sich an der von Luftmatratzen orientieren. Durchsichtige Kunststoffhüllen können generell über Spiegelflächen von Solarkraftwerken insbesondere solaren Rinnen- und Turmkraftwerken bzw.- kollektorfeldern angebracht werden und mittels Druckgasen Form und oder Festigkeit erlangen und zum Schutz der Spiegel vor Umwelteinflüssen verwendet werden. Spiegelfolie kann auch für Spiegel von Solartürmen genutzt werden.

Entlang eines Rohres, z. B. eines Absorberrohres können Halteelemente wie Stangen zwischen dem Spiegelelement dem Absorberrohr oder einem anderen Rohr angebracht sein, um den Spiegel im gewünschten Abstand zum Absorberrohr zu halten. Diese Haltelemente können auf dem Absorberrohr drehbar gelagert sein. Die Halteelemente können am Rahmen befestigt sein, der sich wie oben beschrieben innerhalb oder ausserhalb des Folienschlauchs befindet. Ggf greifen dabei die Halteelemente von aussen den Folienschlauch und drücken diesen gegen den innen liegenden Rahmen. Ggf. können Seilen, Schnüren, Drähten und oder Fäden die um die Spiegelelemente bzw. die Schlauchfolie gespannt sind, Kräfte wie sie z.B. vom Wind erzeugt werden könnten, auf die Halteelemente übertragen werden.

Derartige Spiegel können auch zur Konzentration des Sonnenlichts auf Photovoltaikmodule genutzt werden.

Der Rahmen auf den die Schlauchfolie gespannt wird, kann zumindest teilweise aus unter Spannung stehenden Seilen, Schnüren, Drähten und oder Fäden bestehen. Der Rahmen kann zumindest teilweise aus Halb- und oder Hohlprofielen wie z.B. Rohren bestehen.

Überschüssiger Strom kann ggf. als Gas, wie z.B. Wasserstoff gespeichert werden. Ggf. kann dieses Gas auch mittels Kraftwärmekopplung in großen, aber auch in kleinen Kraftwerken, die in Häusern stehen zur Energieerzeugung genutzt werden. Die Kraftwerke in Häusern können ebenfalls an Komponenten von solarthermischen Kraftwerken angeschlossen sein.

Komponenten von solarthermischen Kraftwerken mit Druckgas, können ein Ventil aufweisen und oder ein Pumpsystem für Druckgase angeschlossen sein, dass bei Bedarf den Gasdruck nachregeln kann.

Generell könnten thermische Speicher auch mit Photovoltaikmodulen kombiniert werden und den Strom in Wärmeenergie Zwischenspeichern.

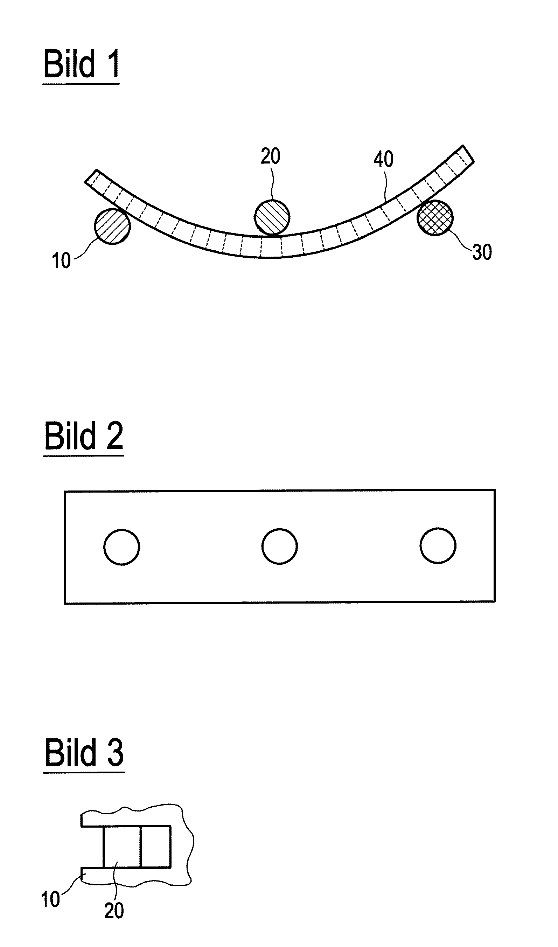

Ein Hohlspiegel für ein Solarrinnenkraftwerk kann auch dadurch erzeugt werden, dass eine flexible und verspiegelt flache Platte (Bild 1, Position 40) genommen und zwischen drei parallel verlaufenden Stäben (Bild 1, Position 10, 20, 30) und oder Rohre so gespannt wird, dass ein Hohlspiegel geformt wird. Die Stäbe können mit Distanzelementen (Bild 2) auf gleichmäßigen Abstand zu einander gehalten werden. Solch ein Distanzstück kann in regelmäßigen Abständen angebracht sein. Die verspiegelte Platte (Bild 3, Position 10) kann Aussparungen haben durch die dann zumindest einer der parallelen Stäbe (Bild 3, Position 20) mit einem Rahmenelement zur Führung um das Absorberrohr verbunden werden kann. Das mittlere Loch kann auch versetzt sein und so die gewünschte Biegung der Plate erzeugen. Auch können mehre als drei Löcher und mehr als drei Stäbe bzw. Rohre angeordnet werden. Ein Vorteil der Anordnung von Spiegel und formgebenden Elementen ist auch, dass sich der Spiegel bei Erwärmung und Abkühlung relativ frei ausdehnen kann, ohne dabei die formgebenden Elemente und damit sein Form stark zu verändern.

Solarthermische Kollektoren können auch Prozesswärme und/oder Wasserdampf für Industriebetriebe, wie z.B. Backstrassen oder Zuckerfabriken oder Wäschereien und oder sonstige verarbeitende Betriebe angeschlossen werden. Ggf. kann die solarthermische Energie um konventionelle und oder elektrische Energie ergänzt werden. Ggf. kann die Prozesswärme und oder der Dampf nach der Stromerzeugung mittels Solarthermie zur Verfügung gestellt werden. Photovoltaikstrom aber auch Strom aus Solarthermie kann auch zum Betrieb von Komponenten von solarthermischen Kraftwerken wie z.B. Ölpumpen genutzt werden. Ggf. kann er in Akkus zwischengespeichert werden. Wärme aus solarthermischen Kraftwerken kann auch zum Betrieb von Kraftfahrzeugen genutzt werden und ggf. mit Batterie- bzw. Akkutechnik und ggf. mit anderen Verbrennungs-Antriebstechniken kombiniert werden.

Das Licht kann mit oben beschriebenen Reflektoren auch auf Photovolatikmodule reflektiert werden. Photovolataikmodule können dabei auch ergänzend zur thermischen Nutzung angebracht sein, z.B. entlang von Rohren bzw. Rinnen auf die das Sonnenlicht gebündelt reflektiert wird, so dass die Photovoltaikmodule das gebündelte Licht zur Stromerzeugung nutzen und gleichzeitig ein Wärmeabtransport durch ein entsprechendes durch die Rohre strömendes Medium möglich ist.

Ggf. kann ein Folienschlauch dadurch gebildet werden, dass eine flächige Folie längs der späteren Rinne halb verspiegelt ist und die unverspiegelte Hälfte der Folie dann über die verspiegelte Hälfte gefaltet und verklebt wird. Ggf. kann ein Rand der Folie vor dem Verkleben einmal gefaltet werden. Die Ränder der Folien können miteinander verklebt werden. Ggf. ein zumindest ein Rand der Schutzfolie gefaltet und dann verklebt werden. Die Schutzfolie kann sich so ausbeulen, dass Niederschlag ablaufen bzw. abrutschen kann. Ggf. können die Spiegelelemente ggf. mit Schutzfolie- zusammenrollbar und/oder zusammenfaltbar sein und so möglichst wenig Transportkapazität benötigen. Zur Installation am solaren Kraftwerk bzw. am solaren Kollektorfeld, werden die Spiegelelemente ggf. mit Schutzfolie ausgerollt und/oder entfaltet werden. Die Schutzhülle und/oder Spiegelelemente können mit Druckluft in Form gebracht werden. Die Schutzfolie kann auch wie ein Gewächshaus über dem Solarrinnenkollektor angeordnet sein.

Der Sonnenstand kann ggf. durch eine Kamera und entsprechende Bildauswertung ermittelt werden. Die Spiegel können dann entsprechend ausgerichtet werden. Ggf. können entlang einer Rinne mehrere Spiegeleinheiten miteinander verbunden werden. Dazu können zwischen ihnen ggf. über Kreuz Schnüre und oder Seile und oder Drähte gespannt werden. Sie können dann gemeinsam mit einem oder zwischen zwei Elektromotoren verstellt werden. Der Elektromotor kann auf das Kugellager und oder das Bogenelement oder auf eine zusätzliche Kreisrunde Zahnradscheibe einwirken. Es können hierfür Stellmotoren wie in Roboterarmen verwendet werden. Die Bogenelemente können so mit dem Boden verbunden werden, dass zwischen Ihnen im wesentlichen nur Zug- und kaum oder keine Druckkräfte - außer über den Boden bzw. das Gebäude selbst - übertragen werden. Natürlich können die Druckkräfte auch entlang der Rinne übertragen werden. Die Stellmotoren bzw. deren Steuerung können ihre Relativposition und oder Ausrichtung bzw. die Relativposition der Spiegel und oder der Ausrichtung im Bezug zur Kamera kennen und bei Ihrer Steuerung der Spiegel entsprechend berücksichtigen. Die Nachführung kann auch erfolgen, indem die Position des solaren Kollektorfeldes auf der Erde und damit die Position zur Sonne abhängig von der Uhrzeit bekannt ist.

Sollte an sonnenreichen Tagen mehr Strom auch Windstrom produziert werden als benötigt wird, stellt sich oft das Problem der Speicherung von Energie. Für die kurzfristige Speicherung eignen sich thermische Speicher mit z.B. Öl oder Salzschmelzen als Speichermedium. Als langfristige Speicher dienen oft sog. Pumpspeicherkraftwerke. Chemische Speicher wären generell auch möglich, so könnte Magnesium Pulver bei Bedarf oxidiert werden, z.B. in einer sog. Termitreaktion um mit der thermischen Energie dann elektrischen Strom z.B. über Dampfturbinen zu erzeugen. Stromüberschüsse könnten wiederum genutzt werden, um das Magnesiumpulver zurück zu gewinnen. An Stelle von Magnesium eignen sich eine ganze Reihe weiter Elemente um chemische Energie zu speichern. Natürlich können bereits existierende Kraftwerke um diese Möglichkeiten nachgerüstet werden, insbesondere auch zur Wasserstoffverbrennung. Nuklearkraftwerke können auch ergänzend und/oder ersetzend um die Möglichkeit der Verbrennung beliebiger auch mehrerer chemischer Energieträger zur Stromerzeugung nachgerüstet werden.

Elektrischer Strom, insbesondere aus zumindest teilweise solar betriebenen Kraftwerken oder aus sonstigen regenerativen Energien aber auch aus konventionellen oder nuklearen Quellen, kann auch zur Gewinnung von Wasserstoff genutzt werden.

Große Mengen Wasserstoff könnten unter Wasser, insbesondere unter der Meeresoberfläche, insbesondere in großen Tiefen von über 100 m oder von über 1.000 m gespeichert werden. Neben klassischen Speichertechniken können hierzu flexible Speicher aus z. B. weitestgehend gasdichten und ggf. mehrlagigen Textilien und oder Folien und oder elastischen ggf. ballonartigen Material an Rohrleitungen für Wasserstoff angeschlossen werden. Der hohe Druck in der Meerestiefe sorgt dafür, dass die Speicher bei gleicher Festigkeit der Speicherhülle deutlich kleiner ausfallen können als an Land. Die Speicher können mehrere Kammern aufweisen. Diese können ggf. über Ventile verbunden sein. Auch können mehrere Rohre an die Speicher angeschlossen werden. Hängen mehrere Kammern an einem Rohr so können einzelne Kammern per Ventil umgangen werden, wenn diese z.B. beschädigt ist. Dazu können entlang eines Rohrs mehrere Ventile angebracht sein. Die Gasspeicher können nach oben hin steil zulaufend ausgelegt sein, so dass Gegenstände, die von oben durchs Wasser auf den Speicher sinken, an diesem abrutschen. Die Speicher können so ausgelegt sein, dass sie keinen oder nur minimalen oder negativen Auftrieb unter Wasser haben und das auch dann, wenn sie mit Wasserstoff gefüllt sind. Der Untergrund der Speicher kann aus ebenen Betonflächen bestehen, damit die Speicherhülle nicht durch schroffes Gestein beschädigt werden kann. Die Zu- und Ableitung von Gas kann über ein Rohr erfolgen welches in den Speicher hinein reicht und mehrere Öffnungen aufweist. Ggf. kann die Speicherhülle unterschiedlich schwer ein, wobei die Teile die weiter weg von der Gaspipeline sind, dann schwerer wären, so dass das Gas immer von weiter weg hin zur Pipeline gedrückt wird und sich keine Gaseinschlüsse bilden können, die keine Abflussmöglichkeit zur Pipeline haben. Ggf. kann bei normalem Betrieb des Speichers darauf verzichtet werden diesen vollständig zu entleeren, damit die Pipeline immer Zugang zum gespeicherten Gas hat. Wasserstoff kann ggf. auch gleich in Nähe bzw. im Speicher und unter Wasser ggf. aus Umgebungswasser erzeugt werden. Ggf. kann Süsswasser oder destilliertes Wasser hierzu durchs Meer gepumpt werden. Die Speicher können auch nach dem Prinzip von Tauchglocken gestaltet sein.

Die Speicher können an ein Gasnetz angeschlossen sein, an dem alle möglichen Verbraucher angeschlossen sein können selbst angeschlossen sein.

Wassersstoff kann in diesem Szenario auch zur Erzeugung anderer Gase bzw. Gasgemische mit genutzt werden, die anschließend gespeichert oder durch Rohre geleitet werden. Dies gilt insbesondere dann, wenn es darum geht Gasleitungen zu Haushalten zu nutzen. Gas kann auch in einen anderen Aggregatzustand versetzt, z.B. verflüssigt werden, bevor es in die Speicher im Meer gepumpt wird. Unter Gase in Anspruch 1 bis Anspruch 4 sind alle Stoffe zu verstehen, die bei 20 Grad Celsius und 1 Bar Druck gasförmig vorliegen.

Unter "voll funktionsfähig" in Anspruch 1 ist insbesondere zu verstehen, dass der Gasspeicher für hohe Drücke von z. B. mehr als 100 bar dann eine ausreichend hohen Wasserdruck als Ausgleich benötigt, da er ansonsten beschädigt würde.

Grundsätzlich können so auch andere Gase wie Kohlendioxid gespeichert werden. Auch kann so ein gewöhnlicher Druckluftspeicher gebaut werden. So kann Strom bei der Entspannung der gespeicherten Gase gewonnen werden. Ggf. kann dabei auch Kälte gewonnen werden und für das Kühlen von Objekten, wie z. B. großen Lagerhallen genutzt werden. Ggf. kann ein Kohlendioxid und/oder Stickstoff Speicher zwischen oder nahe bei mehreren Kammern oder Speichern für Wasserstoff angelegt werden. Sollte Wasserstoff in die Umgebung ausweichen, so kann Kohlendioxid gezielt frei gesetzt werden um die Explosionsgefahr zu senken. Im Speicher kann zumindest ein weiteres Rohr zum Absaugen von Gasen angebracht sein. Insbesondere in Bodennähe, wo sich Gase ansammeln würden, die schwerer sind als Wasserstoff. Ggf. kann das Absaugrohr so ausgelegt sein, dass es beweglich in unterschiedlicher Höhe des Speichers Gas absaugen kann. Ggf. kann Messtechnik zur Bestimmung des Gasgemisches im Speicher angebracht sein. Ferner können Möglichkeiten zur Entzündung von an die Wasseroberfläche strömendem Wasserstoff, z.B. mittels Laser, installiert werden. Damit gezielt eine sofortige Verbrennung stattfindet bevor sich grössere Gasmengen mit entsprechender Explosionsgefahr ansammeln können. Grundsätzlich könnten so auch flüssige oder feste Stoffe, wie z.B. grosse Mengen an Trinkwasser, im Meer gelagert werden. Ggf. kann dieses mittels grosser schwimmender Trichter, ggf. aus Folien und oder Textilien bei Regen an der Meeresoberfläche aufgefangen werden. Die Trichter können bei Regen auf und bei Sonne wieder zusammenfaltbar sein. Das Trinkwasser kann auch über Leitungen aus Flüssen, Seen oder der Kanalisation an Land in die Speicher geleitet werden. Die Speicher können auch im Wasser, bzw. auf dem Wasser schwimmen oder tauschen und durch Verankerung, bzw. per Anker mit dem Meeresgrund verbunden sein. Die Süßwasserspeicher können auch wie grosse Schwimmbecken im Meer ausgelegt sein. Die Süßwasserspeicher können auch per Rohrsystem das Süßwasser an beliebige Orte - rund um die Welt - verteilen.

Die Gasspeicher unter Wasser können per Rohrleitung an Verladehäfen und - bahnhöfe angeschlossen werden. So können dann Schiffe, Bahnen und LKWs be- bzw. entladen werden.

Wasserstoff kann dann als Energieträger für alle möglichen Arten von mobilen Geräten genutzt werden, wie z.B. Flugzeugen. Insbesondere kann der Wasserstoff auch zum Antrieb mobilen Geräten insbesondere von Fortbewegungsmitteln wie z.B. Flugzeugen, Landfahrzeugen, Wasserfahrzeugen und oder Kombinationen daraus genutzt werden. Wasserstoff kann dabei klassisch getankt, bzw. ins Fortbewegungsmittel umgefüllt werden. Es kann aber auch ein Austausch von Kapseln bzw. Patronen die mit Wasserstoff gefüllt sind erfolgen. Die Kapseln und oder Patronen können grundsätzlich in geeigneter Weise, z.B. durch Doppelhüllen mit Unterdruck bis hin zu Vakuum isoliert sein. Ggf. können die Doppelhüllen auf Teilflächen gegeneinander abgestützt sein. Ggf. können diese auch besonders stoßfest ausgelegt werden und oder zumindest teilweise mit einer sehr bruchsicheren Schicht umgeben sein. Hierfür kann z.B. Material heutiger Fahrzeugtanks verwendet werden. Ergänzend oder ersetzend zum Wasserstoff können auch alle anderen, thermischen bzw. chemischen Energiespeicher, insbesondere die oben erwähnten, zur Versorgung von Fahrzeugen mit Energie genutzt werden. Diese können ebenfalls umgefüllt oder in Kapseln bzw. Patronen ausgetauscht werden. Ggf. kann, ähnlich wie bei Thermoskannen, eine Verspiegelung die Wärmestrahlung zurück reflektieren. Wie bei Wasserstoffspeichern können Wärmespeicher auch durch Unterdruck zwischen zwei Hüllen isoliert sein. Die Hüllen können auf Teilflächen gegeneinander abgestützt sein oder mit körnigen Material wie Sand aufgefüllt sein. Die thermische Energie kann dabei direkt zum Vortrieb z.B. über Verbrennungs- oder Dampfmotoren oder Turbinen genutzt oder zunächst in elektrischen Strom, z.B. in Sterlingmotoren und/oder Turbinen und/oder Dampfmotoren, gewandelt werden. Ggf. kann dabei Wasserdampf abgegeben werden. Ggf. kann ein Arbeitsgas gekühlt und zumindest teilweise wiederverwendet werden. Natürlich kann man Fortbewegungsmittel auch direkt mit erhitzen Wasser bzw. Wasserdampf wie oben beschrieben mit Energie versorgen und zum Antrieb nutzen. Tankstellen, an denen die thermischen Energiespeicher bzw. Medien zur Übertragung thermischer Energie auf Fortbewegungsmittel übertragen werden können, können an wie ober für konventionelle Kraftwerke beschrieben an solare Kollektorfelder angeschlossen sein. Ggf. kann an den Tankstellen auch elektrischer Strom zur Erhitzung thermischen Speichermedien, wie von Wasser bzw. Wasserdampf oder Salz bzw. Salz-schmelzen und oder Thermoölen genutzt werden. Dies kann zumindest teilweise auch mittels Verbrennung von Wasserstoff, ggf. gemischt mit anderen Gasen, erfolgen. Natürlich können auch Kombinationen aus den vorher genannten Energieträgern, insbesondere kurz- und langfristigen Energieträgern, und oder Kombinationen aus Energiewandlern zum Antrieb von Fortbewegungsmitteln genutzt werden. Die thermische Energie kann auch zum Heizen und oder Vorheizen von Komponenten des Fortbewegungsmittels, insbesondere des Innenraums analog zu heutigen Standheizungen genutzt werden. Klimaanlagen können auch mit Dampfmotoren angetrieben werden. Dies kann ergänzend und oder ersetzend zu heutigen Systeme auf z.B. Benzin-, Diesel- und oder Gas-Basis und oder Batterie bzw. Akkutechnik, wie z.B. Li-Ionen-Basis erfolgen. Ggf. kann die Energie eines kurzfristigen Energieträgers, z. B. einer Salzschmelze, im Fortbewegungsmittel in elektrische Energie gewandelt und in einem anderen, insbesondere langfristigeren Energiespeicher, z.B. einem Li-Ionen-Akku und oder Kondensatoren, gespeichert werden. Dies kann auch bei Stillstand des Fortbewegungsmittels erfolgen. Zum Betrieb des Fortbewegungsmittels kann dann der Strom aus dem Akku und oder Kondensatoren und oder der Wandlung von thermischer Energie in Strom genutzt werden. Ggf. kann zusätzlich der über Photovoltaikmodule auf dem Fahrzeug erzeugte Strom in einer der aufgeführten Formen gespeichert werden. Neben PKW, Kraftfahrrädern, LKW, Flugzeugen, Schiffen, Booten und Jetski sind hier auch Busse und Bahnen unter Fortbewegungsmitteln zu verstehen.

Das Konzept zum Austausch von Akkus bei elektrischen Fahrzeugen kann dahingehend verbessert werden, dass die Größe der Akkupacks bzw. der Anzahl der einzelnen Zellen variieren kann und je nach an der Wechselstation erkannten Fahrzeugtypen zusammen gesetzt und ausgetauscht werden. Ggf. kann der Fahrer entscheiden wie viele Akkuzellen er laden will. Einzelne Defekte Akkuzellen können ausgetauscht werden, bzw. kann das Akkupack so ausgelegt sein, dass defekte Zellen nicht zum Versagen des gesamten Akkupacks führen.

Solarthermie kann auch über Peltierelemente in elektrischen Strom verwandelt werden. Ggf. können Peltierelemente in großer Zahl auch ein klassisches Kraftwerk ersetzen. Peltierelemente könnten insbesondere dann sehr viel preiswerter werden, wenn sie in großer Stückzahl in mobilen Geräten eingesetzt würden. Thermische Speicher mittels derer elektrischer Strom gewonnen werden kann, z.B. über ein Peltierelement, können in allen möglichen Geräten die elektrischen Strom verbrauchen, genutzt werden. Ggf. können die thermischen Speicher mit anderen Speichern für elektrischen Strom wie Akkus und/oder Kondensatoren, insbesondere sog. Supercaps kombiniert werden. Dabei kann der Bedarf des Geräts an elektrischen Strom zumindest zum Teil aus Akkus und oder Kondensatoren erfolgen. Strom zum Aufladen der Akkus und oder Kondensatoren kann - insbesondere in Phasen, in denen der Stromverbrauch des Geräts niedrig ist - dann der thermische Speicher über ein Peltierelement oder sonstige Wandlungseinheit liefern. Akku und oder Kondensator können zusätzlich natürlich auch klassisch an der Steckdose geladen werden. Der thermische Speicher kann auch durch elektrischen Strom geladen werden. Hierzu kann eine Heizspule inmitten des thermischen Speichers angebracht sein und über elektrischen Strom, z.B. aus einer normalen Steckdose, erhitzt werden. Meß- und Regeltechnik zum Schutz vor Überhitzung kann ebenfalls am thermischen Speicher angebracht sein und ggf. die Stromzufuhr zur Heizspule unterbrechen. Ggf. kann ein Ladegerät den Strom für die Kombination aus zwei oder drei Elementen aus thermischen Speicher und oder Akku und oder Kondensator liefern. Ggf. kann ein schnell aufladbarer Kondensator einen Akku langsame aufladen. Den Ladezustand der Kondensator kann ein Anzeigenelement am Gerät analog und oder ergänzend zur heutigen Akkuanzeige anzeigen. Der Kondensator kann dann mehrmals kurz aufgeladen werden und lädt dann den Akku, ohne dass dieser lange an das Stromnetz an zu schließen ist.

### Bevorzugte Ausführungsbeispiele

In einer Ausgestaltungsform umfasst die Erfindung ein Kraftwerk zur Erzeugung elektrischen Stroms, wobei das Kraftwerk zur Erzeugung des elektrischen Stroms mittels konventioneller Energieträger, wie z.B. aus fossilen Energieträgern und/oder Nukleartechnik konzipiert und gebaut wurden, durch Nachrüstung auch solare Energie zur Stromerzeugung genutzt wird.

In einer weiteren Ausgestaltungsform umfasst die Erfindung ein Kraftwerk zur Erzeugung elektrischen Stroms, wobei das Kraftwerk zur Erzeugung des elektrischen Stroms mittels konventioneller Energieträger, wie z.B. aus fossilen Energieträgern oder Nukleartechnik konzipiert und gebaut wurden und durch Nachrüstung auch solare Energie zur Stromerzeugung genutzt werden kann indem zumindest ein Teil der thermischen Energie die in elektrischen Energie über zumindest eine Kraftwerksturbine gewandelt wird zumindest teilweise mittels solarer Kollektoren erzeugt wurde.

In einer vorteilhaften Ausgestaltungsform umfasst die Erfindung ein Kraftwerk zur Erzeugung elektrischen Stroms, wobei das Kraftwerk zur Erzeugung des elektrischen Stroms mittels konventioneller Energieträger, wie z.B. aus fossilen Energieträgern oder Nukleartechnik konzipiert und gebaut wurden und durch Nachrüstung auch solare Energie zur Stromerzeugung genutzt werden kann indem zumindest ein Teil der thermischen Energie die in elektrischen Energie über zumindest eine Kraftwerksturbine gewandelt wird zumindest teilweise mittels solarerthermischer Kollektoren erzeugt wurde.

In einer bevorzugten Ausgestaltungsform umfasst die Erfindung ein Kraftwerk zur Erzeugung von elektrischem Strom, wobei per Fernleitung solarthermische Energie zum Kraftwerk geführt wird.

In wieder einer anderen Ausgestaltungsform umfasst die Erfindung ein Kraftwerk zur Erzeugung von elektrischem Strom, wobei die Fernleitung Straßen kreuzen.

In einer weiteren Ausgestaltungsform umfasst die Erfindung ein Fernwärmenetz, wobei die thermische Energie aus solarthermischen Kollektoren eingespeist wird.

In einer vorteilhaften Ausgestaltungsform umfasst die Erfindung ein Fernwärmenetz, wobei die eingespeiste solarthermische Energie vor Ihrer Einspeisung nicht in elektrische Energie gewandelt wird.

In einer bevorzugten Ausgestaltungsform umfasst die Erfindung ein Fernwärmenetz, wobei die eingespeiste solarthermische Energie vor Ihrer Einspeisung in elektrische Energie gewandelt wurde.

In einer weiteren Ausgestaltungsform umfasst die Erfindung ein Fernwärmenetz, wobei die solarthermische Energie in solaren Rinnenkraftwerken und oder solaren Turmkraftwerken erzeugt wird.

In einer vorteilhaften Ausgestaltungsform umfasst die Erfindung ein Ventil, wobei diese ein Trägermedium von solarthermischer Energie in ein Fernwärmenetz oder ein Kraftwerk zur Stromerzeugung lenken können.

In einer bevorzugten Ausgestaltungsform umfasst die Erfindung einen Stirlingmotor, der mittels solarthermischer Energie einen Kompressor einer Kältemaschine und oder Klimaanlage mechanisch antreibt.

In einer weiteren Ausgestaltungsform umfasst die Erfindung ein Stirlingmotor, wobei ein Kolben zur Aufnahme der thermischen Energie in einen Speicher für solarthermische Energie ragt.

In einer vorteilhaften Ausgestaltungsform umfasst die Erfindung einen Gasspeicher, wobei dieser konfiguriert ist, kaputt zu gehen, wenn kein äußerer Wasserdruck auf dem Speicher anliegt. Der Gasspeicher zur Speicherung von Gas ist vorzugsweise so ausgelegt oder konstruiert, dass dieser unter Wasser angeordnet ist und er nur voll funktionsfähig ist, wenn ein Wasserdruck auf eine Oberfläche des Gasspeichers wirkt. Dies bedeutet z.B. dass der Gasspeicher für einen Innendruck ausgelegt ist, dem seine Hülle des Gasspeichers nur bei entsprechend hohem Außendruck wie er in einer bestimmten Meerestiefe herrscht, widerstehen kann. Würde ein solcher Gasspeicher an Land, z.B. auf Höhe des Meeresspiegels mit einem Innendruck befüllt werden, für den der Gasspeicher ausgelegt ist, würde die Hülle des Gasspeichers ersten. Die Idee ist also, den unter Wasser herrschenden Außendruck bei der Konstruktion des Gasspeichers zu berücksichtigen, um insgesamt zu einer günstigeren Bauweise zu gelangen.

Vorzugsweise ist der Gasspeicher in einer Wassertiefe von mehr als 100m, bevorzuget in bis zu 1000m und / oder tiefer, angeordnet.

In einer bevorzugten Ausgestaltungsform umfasst die Erfindung einen Gasspeicher, wobei der Wasserdruck den Großteil des Gegendrucks zum Gasdruck im Inneren des Speichers liefert.

In einer weiteren Ausgestaltungsform umfasst die Erfindung ein Kraftwerk zur Erzeugung von elektrischen Strom und oder Wärme, mit einem Gasspeicher.

In einer bevorzugten Ausgestaltungsform umfasst die Erfindung ein Kraftwerk, wobei mittels eines Peltierelement bzw. mehreren Peltierelemente elektrischer Strom aus Solarthermie erzeugt wird.

In einer vorteilhaften Ausgestaltungsform umfasst die Erfindung einen Energiespeicher als Teil mobiler Geräte, wobei die gespeicherte thermische Energie in elektrische wandeln und diese mittels normaler Akkus und/oder Kondensatoren speichert.

In einer weiteren Ausgestaltungsform umfasst die Erfindung einen Energiespeicher, wobei mittels der Peltierelementr thermische Energie in elektrische Energie gewandelt wird.

In einer bevorzugten Ausgestaltungsform umfasst die Erfindung ein Netzwerk von Kraftwerken, wobei mehrere Kraftwerke zur Erzeugung von elektrischem Strom an eine Fernwärmeleitung für Solarthermie angeschlossen sind.

In einer weiteren Ausgestaltungsform umfasst die Erfindung einem Verladebahnhof, dadurch gekennzeichnet, dass der Verladebahnhof zum Befüllen von Waggons mit Gas an den Gasspeicher gekoppelt ist.

In einer vorteilhaften Ausgestaltungsform umfasst die Erfindung einen Verladehafen, der mittels der Gasleitung zum Befüllen von Schiffen mit Gas an Gasspeicher gekoppelt ist.

## Patentansprüche

1. Gasspeicher zur Speicherung von Gas, **dadurch gekennzeichnet, dass** dieser ausgebildet ist unter Wasser angeordnet angeordnet und/oder betrieben zu werden und er nur voll funktionsfähig ist, wenn ein Wasserdruck auf eine Oberfläche des Gasspeichers wirkt.

2. Gasspeicher zur Speicherung von Gas, **dadurch gekennzeichnet, dass** der Gasspeicher so konfiguriert ist, dass der Wasserdrucks auf die Oberfläche des Gasspeichers den wesentlichen Ausgleich zum Gasdruck im Inneren des Gasspeichers bildet.

3. Gasspeicher nach Anspruch 2 oder 3, **dadurch gekennzeichnet, dass** der Gasspeicher per Gasleitung an ein Kraftwerk gekoppelt ist.

4. Gasspeicher nach einem der Ansprüche 1 bis 3, **dadurch gekennzeichnet, dass** der Gasspeicher in einer Wassertiefe von 100m, bevorzuget in bis zu 1000m und / oder tiefer, angeordnet ist.

5. Energieversorgungssystem mit einem Gasspeicher nach einem der Ansprüche 1 bis 4 und mit mindestens einem Kraftwerk welches zur Erzeugung elektrischer Energie exklusiv mittels konventioneller Energieträger, insbesondere fossiler Energieträger und / oder Nukleartechnologie konzipiert, gebaut und betrieben wurde, **dadurch gekennzeichnet, dass** das Kraftwerk durch Nachrüstung darüberhinaus konfiguriert ist, mittels solarer Energie elektrische Energie zu erzeugen.

6. Energieversorgungssystem nach Anspruch 6, **dadurch gekennzeichnet, dass** die solare Energie mittels Sonnen-Kollektoren, insbesondere solarthermischer Kollektoren, erzeugt wird und das Kraftwerk zumindest einen Teil der erzeugten solaren Energie mit Hilfe einer Kraftwerksturbine in elektrische Energie wandelt.

7. Energieversorgungssystem nach Anspruch 5 und 6, **dadurch gekennzeichnet, dass** die Sonnen-Kollektoren zur Erzeugung solarer Energie über Fernenergieleitungen, insbesondere Fernwärmeleitungen zur Leitung eines Trägermediums zur Speicherung der solarthermischen Energie, an das Kraftwerk koppeln.

8. Energieversorgungssystem nach einen der vorangehenden Ansprüche, **dadurch gekennzeichnet, dass** die solarthermischen Kollektoren zur Erzeugung der solarthermischen Energie Rinnenkraftwerke und / oder Turmkraftwerke sind.

9. Energieversorgungssystem nach einen der vorangehenden Ansprüche, **dadurch gekennzeichnet, dass** das Energieversorgungssystem eine Energieweiche, insbesondere ein Mehrwegeventil, umfasst, das konfiguriert ist, das Trägermedium, insbesondere Öl, Gas und / oder Wasser zur Speicherung der solarthermischen Energie, in ein Fernwärmenetz oder in das Kraftwerk zur Energieerzeugung zu führen.

10. Energieversorgungssystem nach einen der vorangehenden Ansprüche, **dadurch gekennzeichnet, dass** das Energieversorgungssystem einen zweiten Energiespeicher, insbesondere einen normalen Akku- und / oder Kondensator-Speicher umfasst.

11. Energieversorgungsnetz umfassend mindestens ein Energieversorgungssystem nach einem der vorangehenden Ansprüche, wobei mehrere Kraftwerke zur Erzeugung von elektrischer Energie gebildet sind, die an ein gemeinsames Fernwärmeleitungsnetz für solare Energie, insbesondere solarthermischer Energie, angekoppelt sind.

12. Energieversorgungssystem nach einem der vorhergehenden Ansprüche, das ein Fernwärmenetz aufweist, **dadurch gekennzeichnet, dass** thermische Energie aus solarthermischen Kollektoren in ein Fernwärmenetz zur Versorgung von Haushalten mit Wärme eingespeist wird.

13. Kraftwerk, **dadurch gekennzeichnet, dass** es an einen Gasspeicher nach zumindest einem der Ansprüche 1-4 per Gasleitung gekoppelt ist.
